# EUROPÄISCHE PATENTANMELDUNG

(11) **EP 1 223 450 A2**
(43) Veröffentlichungstag der Anmeldung: **17.07.2002**
(21) Anmeldenummer: 01000715.1
(22) Anmeldetag: 06.12.2001
(51) Int. Cl.: G02B 21/00

(54) **Mikroskop und Verfahren zum Betreiben eines Mikroskops**

(30) Priorität: 05.01.2001 DE 10100246
(71) Anmelder: Leica Microsystems Heidelberg GmbH, 68165 Mannheim (DE)
(72) Erfinder: BEWERSDORF, Jörg, 69121, Heidelberg (DE); GUGEL, Hilmar, 69221, Dossenheim (DE)
(74) Vertreter: Reichert, Werner F., Dr.

(57) **Zusammenfassung**

Die vorliegende Erfindung betrifft ein Mikroskop, insbesondere ein konfokales oder doppelkonfokales Rastermikroskop, sowie ein Verfahren zum Betreiben eines Mikroskops, wobei mindestens eine dem Objekt zugeordnete Objektträgereinheit vorgesehen ist, wobei mindestens ein in seiner Ausgestaltung bekanntes Referenzobjekt vorgesehen ist und wobei das Referenzobjekt zur Kalibrierung, Justierung und/oder Einstellung des Mikroskops lichtmikroskopisch detektierbar ist.

## Beschreibung

Die vorliegende Erfindung betrifft ein Mikroskop, insbesondere ein konfokales oder doppelkonfokales Rastermikroskop, sowie ein Verfahren zum Betreiben eines Mikroskops.

Mikroskope, insbesondere, Ionfokale Rastermikroskope sind seit geraumer Zeit aus der Praxis bekannt. Hinsichtlich der konfokalen Rastermikroskope wird auf "Handbook of Biological Confocal Microscopy", Plenum Press 1995, 2^{nd} Edition, Editor: J.B. Pawley, hinsichtlich doppelkonfokaler Rastermikroskope wird auf die EP 0 491 289 A1 verwiesen.

Die Mikroskope der gattungsbildenden Art werden insbesondere für Aufnahmen biomedizinischer Objekte eingesetzt, wo Objektdetektionen durchaus einen längeren Zeitraum in Anspruch nehmen können. Bei konfokalen und insbesondere bei doppelkonfokalen Rastermikroskopen unterliegen jedoch die einzelnen Komponenten des Mikroskop sowie das Objekt relativ zum Objektiv thermisch bedingten Drifts, so dass länger andauernde Objektdetektionen hierdurch fehlerbehaftet sein können.

Insbesondere bei konfokalen und doppelkonfokalen Rastermikroskopen ist nach dem Einlegen einer neuen Probe die Fokussierung der neuen Probe zeitaufwendig und fordert ein hohes Maß an Geschicklichkeit des Benutzers. Dies ist insbesondere der Fall, wenn nicht bekannt ist, ob die Probe überhaupt sichtbar sein wird - weil beispielsweise ein neues Fluoreszenz-Präparationsverfahren getestet wird. So kann das Auffinden des Objekts bzw. das Positionieren des Objekts in der Fokalebene des Mikroskopobjektivs schwer, wenn nicht sogar unmöglich sein. Insbesondere wenn ein neues Fluoreszenz-Präparationsverfahren getestet wird, kann ein Objekt mit einer schwachen Fluoreszenzmarkierung schon ausgeblichen sein bevor sich das Objekt in der Fokalebene des Mkroskopobjektivs befindet, da während des Suchvorgangs der Objektbereich andauernd mit zur Anregung der Fluoreszenzmarker geeignetem Licht beaufschlagt wird.

Der vorliegenden Erfindung liegt daher die Aufgabe zugrunde, ein Mikroskop, insbesondere ein konfokales oder doppelkonfokales Rastermikroskop, sowie ein Verfahren zum Betreiben eines Mikroskops anzugeben und weiterzubilden, bei dem driftbedingte Veränderungen detektiert und ausgeglichen werden können sowie Hilfsmittel vorgesehen sind, mit denen ein Objekt einfach und zuverlässig fokussiert werden kann.

Das erfindungsgemäße Mikroskop der gattungsbildenden Art löst die voranstehende Aufgabe durch die Merkmale des Patentanspruchs 1.

Erfindungsgemäß ist zunächst erkannt worden, dass die vor allem thermisch bedingten Driftbewegungen verschiedener Komponenten des Mikroskops bzw. des Objekts relativ zum Objektiv mit einem vertretbaren Aufwand nicht verhindert werden können, beispielsweise durch eine entsprechende Temperaturregelung der relevanten Mikroskopkomponenten. Falls jedoch zumindest ein in seiner Ausgestaltung bekanntes Referenzobjekt vorgesehen ist, anhand dessen Rückschlüsse auf Driftbewegungen gezogen werden können, kann hierdurch die Drift durch entsprechende Justiermaßnahmen kompensiert bzw. ausgeglichen werden. Hierzu muss das Referenzobjekt in seiner Ausgestaltung bekannt sein, d.h. die Größe, Form, Struktur und/oder optischen Eigenschaften des Referenzobjekts sind bekannt. Weiterhin muss das Referenzobjekt lichtmikroskopisch detektierbar sein, was notwendigerweise einen Detektionsvorgang des Referenzobjekts notwendig macht. In erfindungsgemäßer Weise kann durch lichtmikroskopische Detektion des in seiner Ausgestaltung bekannten Referenzobjekts das Mikroskop erneut justiert werden.

Insbesondere kann ein Objekt in einem konfokalen oder doppelkonfokalen Rastermikroskop einfach aufgefunden und fokussiert werden, wenn als Referenzobjekt beispielsweise ein teilweise verspiegelt beschichtetes Deckglas verwendet wird und das Objekt samt Objektträgereinheit und Deckglas entlang der optischen Achse des Mikroskopobjektivs bewegt wird, wobei während der Bewegung fortwährend kontinuierlich nach dem Referenzobjekt gesucht wird. Dieser Detektionsvorgang könnte beispielsweise mit Licht einer Wellenlänge erfolgen, die nicht zur Fluoreszenzanregung der Fluoreszenzmarker geeignet ist, so dass ein Ausbleichen der Fluoreszenzmarker während des Fokussierungsvorgangs vermieden werden kann. Sobald das als teilweise verspiegelte Deckglas ausgestaltete Referenzobjekt detektiert ist, kann eine entsprechende Fluoreszenzdetektion der Fluoreszenzmarker des Objekts und somit die eigentliche Objektmessung folgen. Somit können in besonders vorteilhafter Weise immer wiederkehrende Schritte zur Einstellung des Mikroskops -beispielsweise das Fokussieren unterschiedlicher Objekte - automatisiert werden, so dass insgesamt die Bedienung des Mikroskops vereinfacht wird.

Weiterhin kann in erfindungsgemäßer Weise ein doppelkonfokales Rastermikroskop durch die Verwendung eines Referenzobjekts kalibriert werden. So könnte beispielsweise der Fokus des einen Mikroskopobjektivs genau auf den Fokus des anderen Mikroskopobjektivs ausgerichtet werden, indem ein einfaches konfokales Mikroskopbild des Referenzobjekts mit lediglich einem Objektiv des einen Teilstrahlengangs detektiert wird. Im Anschluss wird dasselbe Referenzobjekt mit lediglich dem zweiten Mikroskopobjektiv des zweiten Teilstrahlengangs delektiert. Ein Vergleich der beiden Aufnahmen desselben Referenzobjekts ermöglicht das laterale und/oder axiale Ausrichten der beiden Mikroskopobjektive relativ zueinander, so dass einerseits die Fokalebenen der beiden Mikroskopobjektive lateral und/oder axial übereinander fallen und andererseits deren optische Achsen übereinstimmen. Somit kann in erfindungsgemäßer Weise das Mikroskop, insbesondere ein doppelkonfokales Rastermikroskop, kalibriert werden, und zwar auch - ggf. automatisch - unmittelbar vor einem durchzuführenden Objektdetektionsvorgang, so dass in vorteilhafter Weise ein Benutzer des Mikroskops keine Kalibrierung durchführen muss.

In einer konkreten Ausführungsform ist die Objektträgereinheit aus Glas angefertigt. In der einfachsten Ausführung könnte es sich bei der Objektträgereinheit um einen herkömmlichen Objektträger oder um ein herkömmliches Deckglas handeln. Insbesondere bei der konfokalen oder doppelkonfokalen Rastermikroskopie weist das Glas des Objektträgers bzw. das Deckglas einen Brechungsindex auf, der für die Verwendung des jeweiligen Mikroskopsobjektivs geeignet bzw. angepasst ist.

In einer bevorzugten Ausführungsform weist eine an die Objektträgereinheit anbringbare Glasplatte mindestens eine als Referenzobjekt ausgestaltete Fläche auf. Insbesondere handelt es sich bei der an die Objektträgereinheit anbringbaren Glasplatte um ein Deckglas. Somit bildet eine entsprechend ausgestaltete Fläche der Glasplatte bzw. des Deckglasses das eigentliche Referenzobjekt. Alternativ oder zusätzlich hierdurch könnte die Objektträgereinheit mindestens eine als Referenzobjekt ausgestaltete Fläche aufweisen.

Die Fläche wiederum weist eine Textur und/oder eine Struktur auf. Diese Textur/Struktur könnte ein regelmäßiges oder unregelmäßiges Gitter aufweisen, das beispielsweise aus einzelnen Strichen besteht. Auch regelmäßige oder unregelmäßige Vielecke oder Kurven sind denkbar.

Alternativ oder zusätzlich hierzu könnte die Fläche eine Beschichtung und/oder eine holographische Aufprägung aufweisen. Hinsichtlich einer konkreten Ausgestaltungsform könnte sich die Textur einer Fläche durch eine entsprechende Beschichtung erzeugen lassen, beispielsweise mit Hilfe von photolithografischen Belichtungsverfahren.

Es ist vorgesehen, dass die Beschichtung reflektierend und/oder lumineszierend ausgeführt ist, so dass eine lichtmikroskopische Detektion des Referenzobjekts möglich ist. Der Reflektionskoeffizient der Beschichtung ist üblicherweise wesentlich kleiner als 1, so dass die Beschichtung lediglich teilweise das auf sie auftreffende Licht reflektiert. Als lumineszierende Beschichtung könnte eine Beschichtung vorgesehen sein, die aus Fluoreszenz- oder Phosphoreszenzmolekülen besteht. Eine solche Beschichtung könnte beispielsweise mit Verfahren aufgebracht werden, die denen der Tintenstrahldrucker ähnlich sind. Insbesondere könnte die lumineszierende Beschichtung derart ausgestaltet sein, dass sie lediglich mit Licht einer Wellenlänge anregbar ist, die für die eigentliche Objektdetektion nicht geeignet bzw. vorgesehen ist. Dementsprechend wird bei einer Referenzmessung das Objekt nicht mit Licht beaufschlagt, dass beispielsweise spezifische Fluoreszenzmarker zum Ausbleichen bringt.

In einer besonders bevorzugten Ausführungsform ist vorgesehen, dass die Textur bzw. Struktur der Fläche asymmetrisch ausgestaltet ist. So könnte die Textur/Struktur beispielsweise aus unregelmäßigen geometrischen Gebilden zusammengesetzt sein, die aus Linien, Kurven, Elipsen- oder Kreissegmenten bestehen. Durch eine asymmetrische Textur/Struktur ist nach einer Detektion des Referenzobjekts eine eindeutige Zuordnung des detektierten Bereichs des Referenzobjekts zu einem entsprechenden, bereits vorher in Verbindung mit dem Referenzobjekt detektierten Objektbereich möglich, so dass hierdurch insbesondere Drifts des Objekts relativ zum Mikroskop detektiert und entsprechend ausgeglichen werden können.

In einer ganz besonders bevorzugten Ausgestaltungsform ist die als Referenzobjekt ausgestaltete Fläche in einer Ebene angeordnet. Hierbei könnte es sich um eine Oberfläche der Objektträgereinheit oder um eine Oberfläche der an die Objektträgereinheit anbringbaren Glasplatte handeln. Auf diese Oberfläche könnte dementsprechend die reflektierende oder lumineszierende Beschichtung aufgebracht sein. Idealerweise ist die Fläche der Objektträgereinheit bzw. die an die Objektträgereinheit anbringbare Glasplatte derart orientiert, dass sie parallel zur Fokalebene des Mikroskopsobjektivs orientiert ist. Hierdurch könnte eine Verkippung der Objekträgerplatte relativ zur Fokalebene des Mikroskopobjektivs insbesondere bei einem doppelkonfokalen Rastermikroskop detektiert werden und mit Hilfe von geeigneten Stellelementen entsprechend korrigiert werden.

In einer weiteren Ausführungsform ist vorgesehen, dass als Referenzobjekt mindestens ein an der Objektträgereinheit anbringbares mikroskopisches Objekt dient. Als mikroskopische Objekte könnten beispielsweise Beads oder Nanocrystals dienen, wobei Beads bzw. Nanocrystals mit gleichen oder unterschiedlichen Größen/optischen Eigenschaften vorgesehen sein könnten. Insbesondere ist vorgesehen, dass die als Referenzobjekte dienenden mikroskopischen Objekte stochastisch verteilt sind. Eine stochastische Verteilung dieser Objekte könnte sich beispielsweise durch Auftropfen einer die mikroskopischen Objekte enthaltenden Lösung auf der Objektträgereinheit erzeugen lassen, wobei die Lösung beispielsweise durch Verdunstung entfernt werden könnte. Bei einer solchen Vorgehensweise ist zunächst lediglich das Referenzobjekt in seiner Ausgestaltung bekannt, d.h. es werden Beads mit einem Durchmesser von beispielsweise 300 Nanometer verwendet. Die Anordnung/Verteilung mehrerer Beads - beispielsweise auf der Objektträgereinheit - sind jedoch stochastischer Natur und zunächst nicht bekannt. Dementsprechend müsste ein Detektionsvorgang der Referenzobjekte durchgeführt werden, so dass auch deren Struktur bzw. Anordnung/Verteilung auf der Objektträgereinheit bekannt ist.

In verfahrensmäßiger Hinsicht wird die eingangs genannte Aufgabe durch die Merkmale des Patentanspruchs 8 gelöst.

In erfindungsgemäßer Weise ist daher erkannt worden, dass es einfacher und vor allem kostengünstiger ist, das erfindungsgemäße Verfahren zum Kalibrieren, Justieren und/oder Einstellen des Mikroskops zu verwenden, als Verfahren einzusetzen, die das Mikroskop oder zumindest wesentliche Bauteile davon auf eine bestimmte Temperatur regeln, so dass hierdurch weitgehend Drifts der Einzelkomponenten unterbunden werden können. In letzterem Fall wäre hinsichtlich einer Kalibrierung oder Einstellung des Mikroskops die der Erfindung zugrunde liegende Aufgabe nicht vollständig gelöst.

Bei dem erfindungsgemäßen Verfahren ist bevorzugt vorgesehen, dass das Referenzobjekt mit einer Bildaufnahme detektiert wird. Hierbei könnte es sich beispielsweise um ein konventionelles Mikroskop mit einer CCD-Kamera als Detektor handeln. Falls es sich bei dem Mikroskop um ein konfokales oder doppelkonfokales Rastermikroskop handelt, ist vorgesehen, dass es sich bei dem Detektionsvorgang um einen Rastervorgang handelt. Dieser Rastervorgang erfolgt in besonders vorteilhafter Weise in Form eines zweidimensionalen optischen Schnitts. Hierdurch ist eine schnelle Detektion des Referenzobjekts gewährleistet, da aufgrund der besonderen Ausgestaltung des Referenzobjekts eine dreidimensionale Datenaufnahme des Referenzobjekts nicht erforderlich ist. Es ist von wesentlicher Bedeutung, dass eine nahezu eindeutige Identifikation des Referenzobjekts in schon nur einem aufgenommenen Bild möglich ist, da das Referenzobjekt in seiner Ausgestaltung bekannt ist. Hierdurch kann auf die Position und Orientierung des Referenzobjekts geschlossen werden, und zwar im Idealfall schon mit einer einzigen zweidimensionalen Bildaufnahme bzw. einem einzigen zweidimensionalen Rastervorgang. Vorzugsweise ist der zweidimensionale optische Schnitt derart orientiert, dass er zu der als Referenzobjekt ausgestalteten Fläche senkrecht steht. Wenn die als Referenzobjekt dienende Fläche beispielsweise parallel zur Fokalebene des Mikroskopobjektivs angeordnet ist, könnte ein zweidimensionaler optischer Schnitt zur Aufnahme des Referenzobjekts derart orientiert sein, dass der optische Schnitt in einer Ebene liegt, die die optische Achse enthält.

In besonders vorteilhafter Weise werden die Bilddaten des Referenzobjekts computergestützt ausgewertet. Diese Bilddatenauswertung könnte beispielsweise mit Methoden der digitalen Bildverarbeitung erfolgen. So könnte beispielsweise anhand der detektierten Bilddaten des Referenzobjekts auf dessen Lage und/oder Orientierung relativ zu dem detektierten Objektbereich geschlossen werden. Hierdurch können Informationen über einen möglichen Drift des Objekts relativ zur Objektträgereinheit bzw. relativ zum Referenzobjekt gewonnen werden.

Weiterhin ist denkbar, dass durch Vergleich von detektierten Bilddaten des Referenzobjekts mit zuvor detektierten Bilddaten - vorzugsweise des Referenzobjekts - auf die Drift des Objekts bzw. der Objektträgereinheit geschlossen werden kann. Durch diese Vorgehensweise kann eine Drift der gesamten Objektträgereinheit - also der Objektträgereinheit samt Objekt und gegebenenfalls Deckglas - relativ zu dem Mikroskopobjektiv detektiert werden, wohingegen im vorigen Fall vor allem eine Drift des Objekts relativ zur Objektträgereinheit detekierbar ist.

In einem konkreten Verfahrensschritt ist vorgesehen, dass eine Drift des Objekts und/oder der Objektträgereinheit durch eine entsprechende Bewegung der Objektträgereinheit ausgeglichen wird. Somit wird das Objekt oder die Objektträgereinheit, die sich aufgrund einer Drift beispielsweise um 2 µm in eine Richtung bewegt hat, um den gleichen Betrag in die entgegengesetzte Richtung zurückbewegt, so dass der ursprüngliche Zustand wiederhergestellt ist. Alternativ oder zusätzlich hierzu ist vorgesehen, dass die Drift des Objekts mit Methoden der digitalen Bildverarbeitung ausgeglichen werden. Hierbei erfolgt der Ausgleich lediglich computergestützt, d.h. es werden gemäß dem obigen Beispiel die Bilddaten des Objekts um einen dem Abbildungsmaßstab der Mikroskopoptik entsprechenden Betrag verschoben. Diese Vorgehensweise erfolgt also lediglich computergestützt und wird auf die detektierten Bilddaten des Objekts angewandt.

In einem besonders bevorzugten Verfahrensabschnitt ist für ein doppelkonfokales Rastermikroskop vorgesehen, dass anhand der Detektion des Referenzobjekts die optischen Teilstrahlengänge, insbesondere deren Weglängenunterschiede, und die Position der Objektive kalibriert und justiert werden. Die Detektion des Referenzobjekts mit lediglich dem Mikroskopobjektiv des einen Teilstrahlengangs des doppelkonfokalen Rastermikroskops ergibt einen Bilddatensatz, der mit dem zweiten Bilddatensatz verglichen werden kann, der mit dem zweiten Mikroskopobjektiv des zweiten Teilstrahlengangs des doppelkonfokalen Rastermikroskops aufgenommen wird. Hierzu wird einerseits das Referenzobjekt mit einem zweidimensionalen optischen Schnitt detektiert, der parallel zur Fokalebene der jeweiligen Mikroskopobjektive orientiert ist. Durch Vergleich dieser beiden Datensätze können die beiden Mikroskopobjektive in lateraler Richtung, d.h. quer zur optischen Achse, aufeinander ausgerichtet werden. Durch die Detektion eines zweidimensionalen optischen Schnitts, der senkrecht zu der als Referenzobjekt ausgestalteten Fläche orientiert ist, können - entsprechende Aufnahmen der jeweiligen Mikroskopobjektive vorausgesetzt - die beiden Mikroskopobjektive in axialer Richtung, d.h. entlang der Richtung der optischen Achse, aufeinander eingestellt werden. Einer Verkippung der beiden Mikroskopobjektive relativ zueinander kann ebenfalls entgegengewirkt werden, so können beispielsweise unscharf abgebildete Teilbereiche der Textur als Anzeichen einer Verkippung gewertet werden. Somit kann mit Hilfe des Referenzobjekts einerseits der doppelkonfokale Rastermikroskopstrahlengang vor der eigentlichen Objektdetektion kalibriert und andererseits während der Objektdetektion zur Justage wiederholt werden.

Zum automatischen Auffinden und/oder Fokussieren eines Objekts ist in einem weiteren Verfahrensschritt vorgesehen, die Objektträgereinheit samt Objekt entlang der optischen Achse des Mikroskopobjektivs bzw. der beiden Mikroskopobjektive zu bewegen und hierbei das von der als Referenzobjekt ausgestalteten Fläche kommende Licht zu detektieren. So könnte beispielsweise eine als Objektträger ausgestaltetet Objektträgereinheit, die eine teilweise reflektierende Oberflächenbeschichtung aufweist, samt Objekt auf den Mikroskoptisch aufgebracht werden. Während einer automatischen Bewegung des Mikroskoptischs (samt Objektträger und Objekt) wird der Objektbereich des Mikroskopobjektivs zur Referenzmessung konfokal mit Laserlicht beaufschlagt. Dieses Laserlicht wird jedoch nicht zur Detektion des Objekts eingesetzt und die Oberflächenbeschichtung des Objektträgers ist lediglich für das Licht reflektierend, dass zur Referenzobjektdetektion eingesetzt wird. Dieses Licht weist eine andere Wellenlänge auf als das, das zur Objektdetektion verwendet wird. Sobald nun die Oberflächenbeschichtung des Objektträgers in die Nähe der Fokalebene des Mikroskopobjektivs bewegt wird, ist ein konfokales Detektionssignal messbar. Wenn das Detektionssignal des Referenzobjekts maximal ist, befindet sich die Oberfläche des Objektträgers in der Fokalebene des Mikroskopobjektivs. Hierdurch kann in ganz besonders vorteilhafter Weise schnell und einfach zumindest ein erster Bezugspunkt gefunden werden, so dass das Auffinden des Objekts hierdurch erheblich vereinfacht und zeitlich verkürzt ist.

Es gibt nun verschiedene Möglichkeiten, die Lehre der vorliegenden Erfindung in vorteilhafter Weise auszugestalten und weiterzubilden. Dazu ist auf die nachfolgende Beschreibung der bevorzugten Ausführungsbeispiele der Erfindung und auf die Zeichnung verweisen. In der Zeichnung zeigen:
- Fig.1a: eine schematische Darstellung einer Elementarzelle einer ersten Textur,
- Fig. 1b: eine schematische Darstellung der zusammengesetzten Textur mit Elementarzellen aus Fig. 1a,
- Fig. 2a: eine schematische Darstellung einer Elementarzelle einer weiteren Textur,
- Fig. 2b: eine schematische Darstellung der zusammengesetzten Textur mit Elementarzellen aus Fig. 2a,
- Fig. 3a: eine schematische Darstellung einer Elementarzelle einer weiteren Textur,
- Fig. 3b: eine schematische Darstellung der zusammengesetzten Textur mit Elementarzellen aus Fig. 3a,
- Fig.4a: eine schematische Darstellung einer Elementarzelle einer weiteren Textur,
- Fig. 4b: eine schematische Darstellung der zusammengesetzten Textur mit Elementarzellen aus Fig. 4a,
- Fig.5a: eine schematische Darstellung einer Elementarzelle einer weiteren Textur,
- Fig. 5b: eine schematische Darstellung der zusammengesetzten Textur mit Elementarzellen aus Fig. 5a,
- Fig. 6a: eine schematische Darstellung einer Elementarzelle einer weiteren Textur,
- Fig. 6b: eine schematische Darstellung der zusammengesetzten Textur mit Elementarzellen aus Fig. 6a,
- Fig. 7: eine schematische Darstellung der zusammengesetzten Textur aus Fig. 1b, mit angedeutetem zweidimensionalen optischen Schnitt,
- Fig. 8: eine schematische Darstellung des zweidimensionalen optischen Schnitts, der in Fig. 7 angedeutet ist und
- Fig. 9: eine schematische Darstellung der gemessenen Intensitätsverteilung aus Fig. 8.

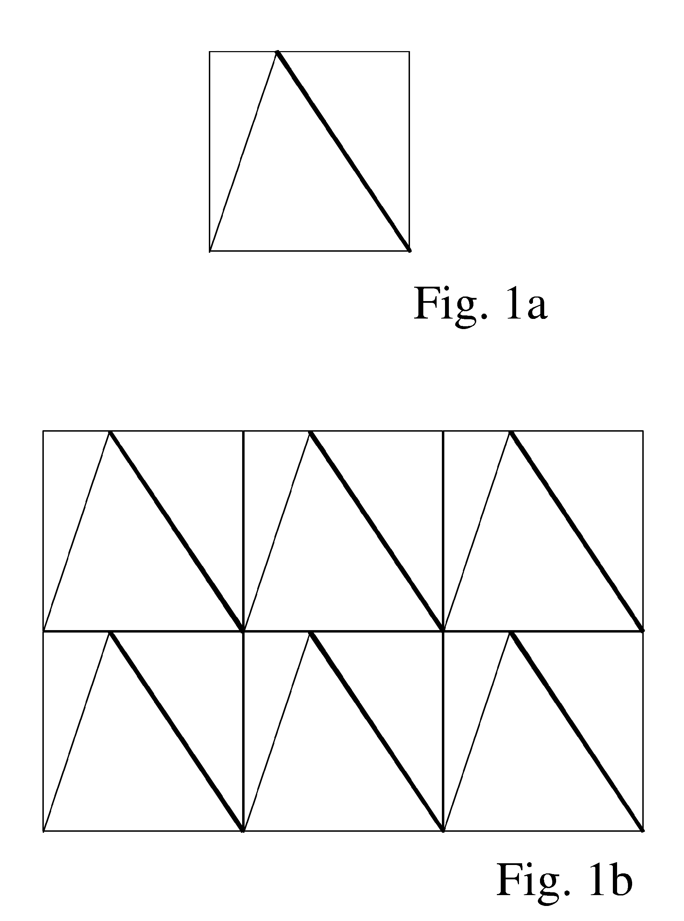

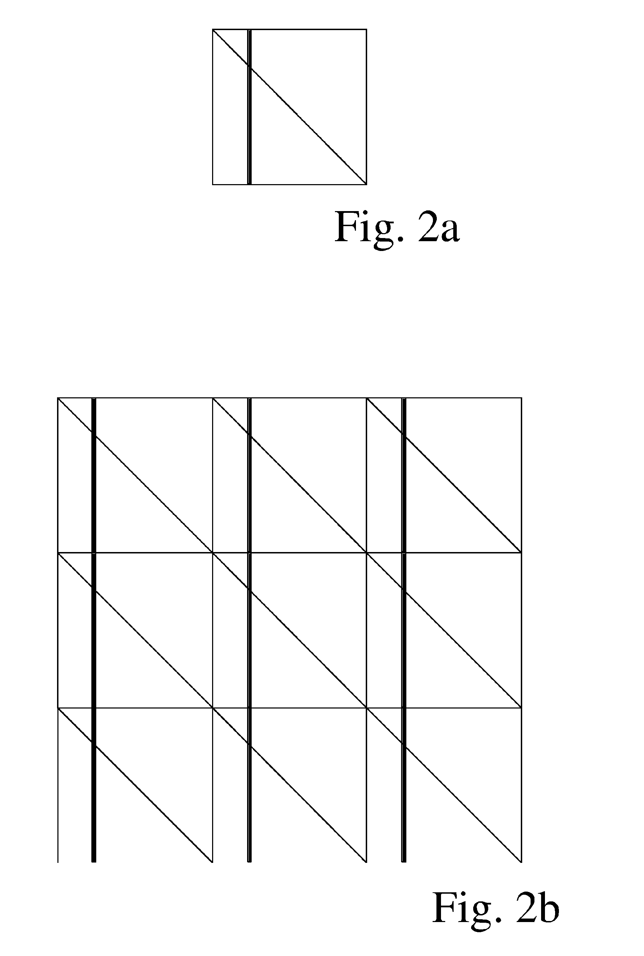

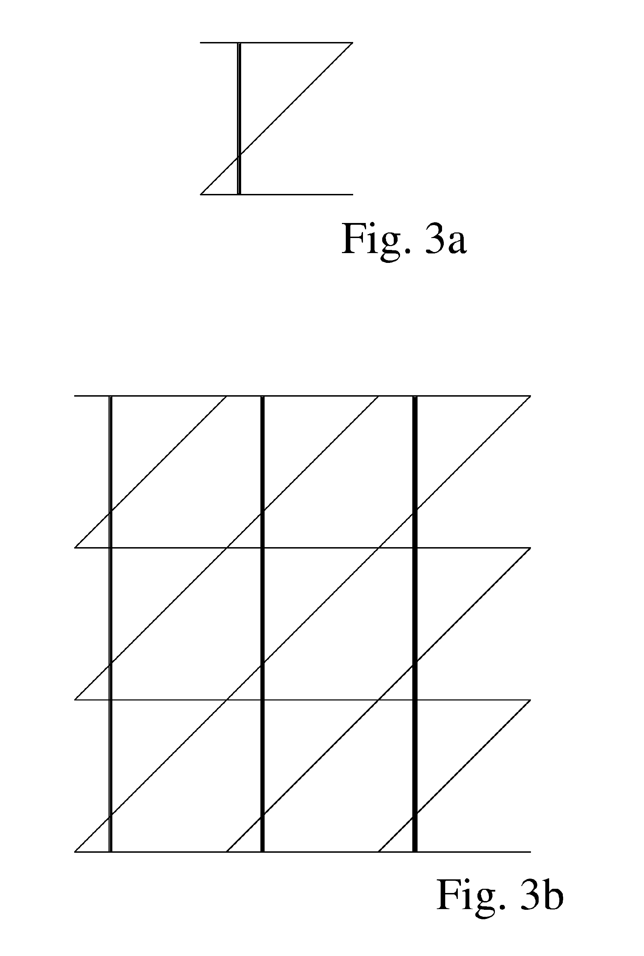

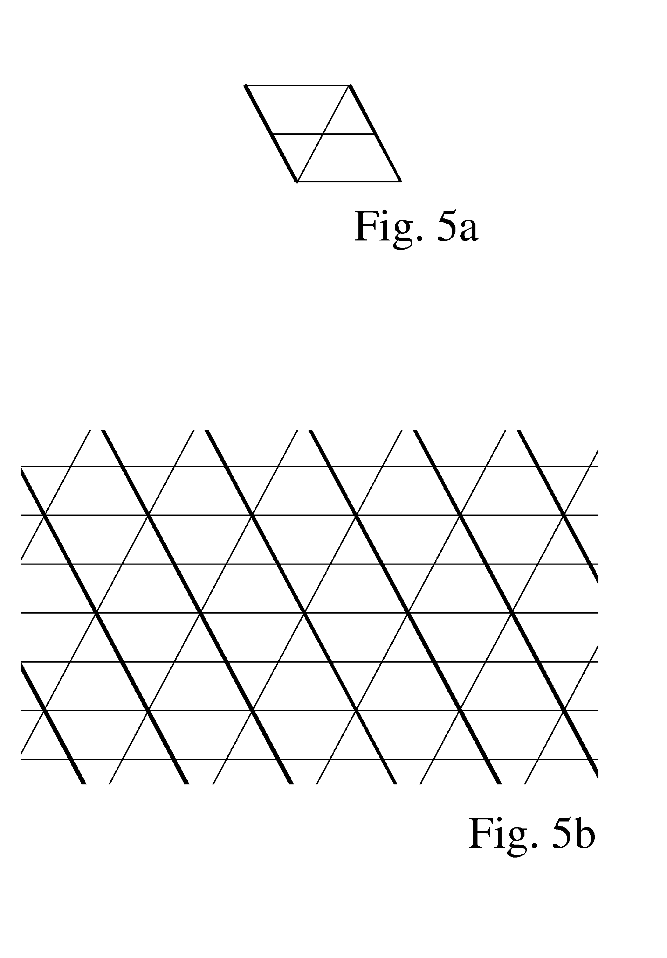

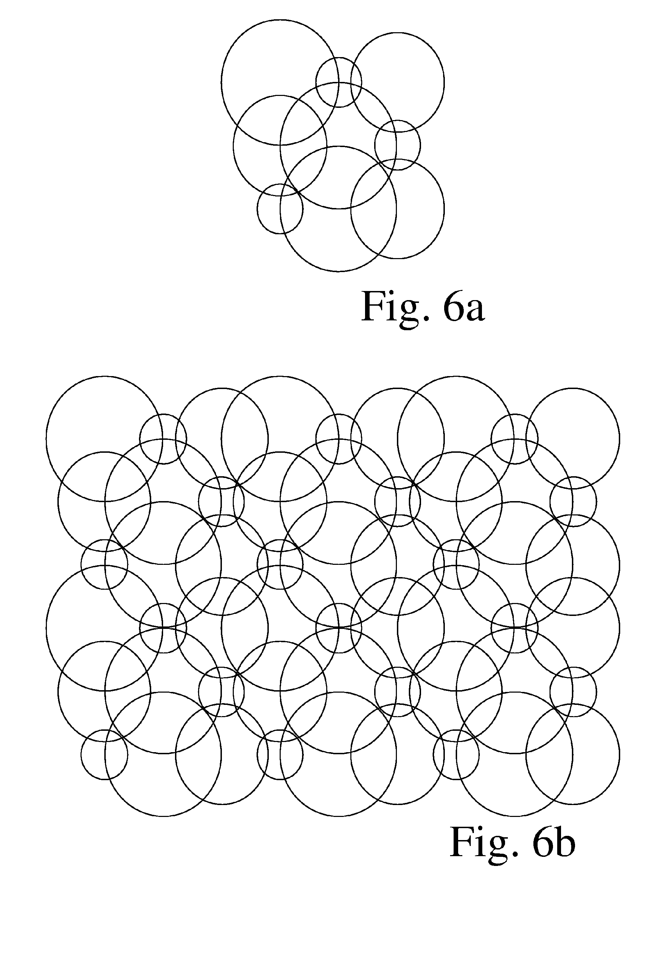

Die Fig. 1a, 2a, 3a, 4a, 5a und 6a zeigen allesamt Elementarzellen einer Textur, die jeweils in den Fig. 1b, 2b, 3b, 4b, 5b und 6b zu einer zweidimensionalen ausgedehnten Textur zusammengesetzt sind. Diese Texturen sind in ihren Ausgestaltungen bekannt, d.h. die jeweiligen Strichlinien sowie die jeweiligen Strichbreiten liegen in einem Bereich von etwa 200 bis 400 nm. Diese Texturen dienen als Referenzobjekt, wobei diese Texturen auf Oberflächen unterschiedlicher Deckgläser aufgebracht sind. Ein solches Deckglas dient als Objektträgereinheit. Somit weist die als Deckglas ausgeführte Objektträgereinheit eine als Referenzobjekt ausgestaltete Oberfläche auf. Die Textur ist hierbei in Form einer Beschichtung auf die Oberfläche aufgebracht. Bei den Beschichtungen aus den Fig. 1b, 2b, und 3b handelt es sich jeweils um eine reflektierende Beschichtung, die einen Reflexionskoeffizient von beispielsweise 0,01 für Licht aus einem Wellenlängenbereich im nahen Infrarot aufweist. Als Laserlichtquelle bietet sich dann z.B. ein cw-Diodenlaser an.

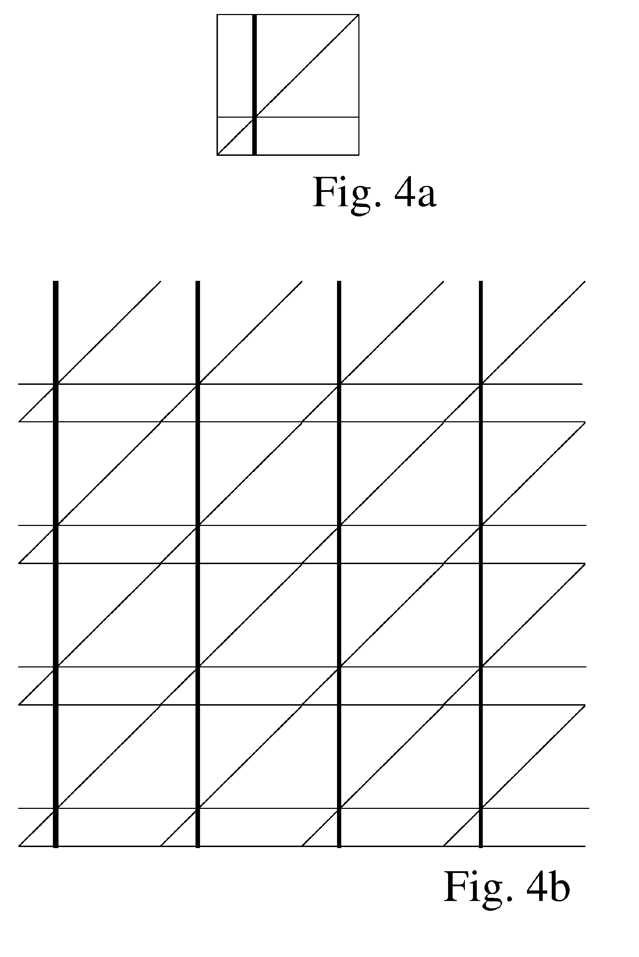

Die Beschichtungen aus den Fig. 4b, 5b, und 6b sind fluoreszierend ausgeführt, es handelt sich jeweils um Fluoreszenzfarbstoffe, die im sichtbaren Bereich zur Fluoreszenz anregbar sind. z.B. mit einem cw-Laser.

Sämtliche in den Fig. 1b, 2b, 3b, 4b, 5b und 6b gezeigten Beschichtungen sind jeweils auf entsprechenden Deckgläsern aufgebracht und in einer Ebene angeordnet.

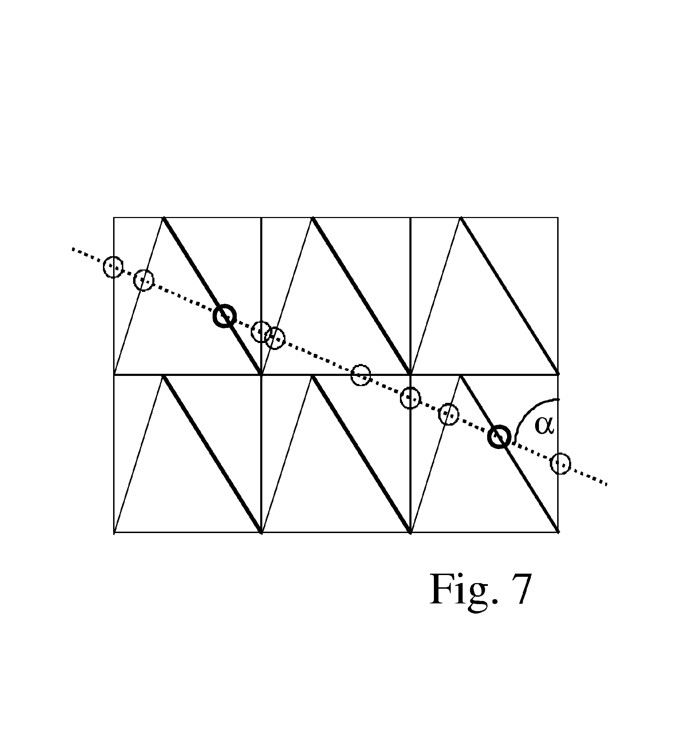

Fig. 7 zeigt in einer schematischen Darstellung die Textur aus Fig. 1b, die mit einem Rastervorgang eines doppelkonfokalen Rastermikroskops zumindest teilweise detektiert wird. Es handelt sich hierbei um einen zweidimensionalen optischen Schnitt, der senkrecht zur Oberfläche des mit der Beschichtung versehenen Deckglases angeordnet ist. Dementsprechend ist die senkrechte Projektion des optischen Schnitts auf die Oberfläche der Textur in Fig. 7 gestrichelt gekennzeichnet.

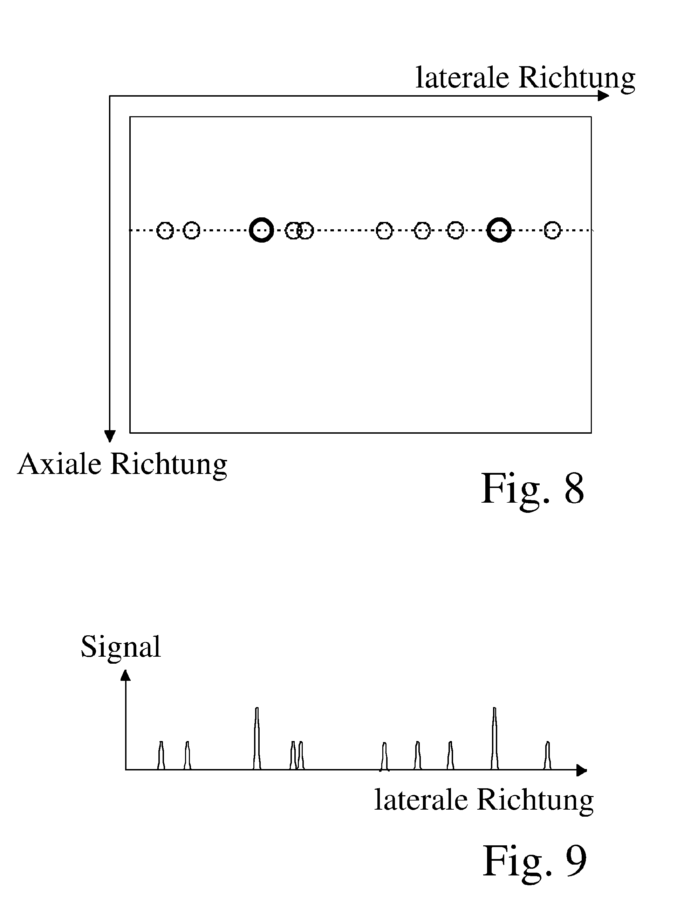

Der zweidimensionale optische Schnitt der Textur aus Fig. 7 ist in Fig. 8 schematisch dargestellt. Mit dick eingezeichneten Kreisen sind jeweils die Schnittpunkte des zweidimensionalen optischen Schnitts mit jeweils einer dicken Linie der Textur aus Fig. 7 gezeigt. Die dünn eingezeichneten Kreise entsprechen den Schnittpunkten mit den dünnen Linien aus Fig. 7. Die laterale Richtung entspricht der Ortskoordinate entlang der Projektion aus Fig. 7. Die axiale Richtung entspricht der Richtung senkrecht zur Textur aus Fig. 7. In der Darstellung aus Fig. 8 wird deutlich, dass lediglich dann von der zweidimensionalen Textur aus Fig. 7 ein Detektionssignal nachweisbar ist, wenn sich die Oberfläche - und somit die Beschichtung der Oberfläche - in der Fokalebene der Mikroskopobjektive befindet.

In Fig. 9 ist das detektierte Signal als Funktion der lateralen Position der Projektion aus den Fig. 7 bzw. Fig. 8 gezeigt. Das Reflexionssignal der dicken Striche der Textur aus Fig. 7 resultiert in einem höheren Detektionsignal, was an den beiden höheren Peaks in Fig. 9 zu erkennen ist. Die dünnen Striche resultieren in Peaks, die allesamt die gleiche Intensität aufweisen.

Die Bilddaten des Referenzobjekts werden computergestützt ausgewertet. Die als Referenzobjekt dienende Textur aus Fig. 7 ist in ihrer Ausgestaltung bekannt, d.h. beispielsweise der Abstand zueinander paralleler Striche ist bekannt. Weiterhin ist die Orientierung des vom doppelkonfokalen Rastermikroskop ausgeführten zweidimensionalen optischen Schnitts bekannt. Somit kann auf die tatsächliche laterale Orientierung der Textur aus Fig. 7 relativ zu dem doppelkonfokalen Rastermikroskop geschlossen werden, da sich für jeden Schnittwinkel α eines Rastervorgangs des Rastermikroskops ein eindeutiges, definiertes Signalmuster, beispielsweise entsprechend Fig. 9, ergibt.

## Patentansprüche

1. Mikroskop, wobei mindestens eine dem Objekt zugeordnete Objektträgereinheit vorgesehen ist, wobei mindestens ein in seiner Ausgestaltung bekanntes Referenzobjekt vorgesehen ist und wobei das Referenzobjekt zur Kalibrierung, Justierung und/oder Einstellung des Mikroskops lichtmikroskopisch detektierbar ist.

2. Mikroskop nach Anspruch 1, **dadurch gekennzeichnet, dass** das Mikroskop konfokales oder doppelkonfokales Rastermikroskop ist.

3. Mikroskop nach Anspruch 1 **dadurch gekennzeichnet, dass** die Objektträgereinheit aus Glas angefertigt ist und als Objektträger oder als Deckglas ausgeführt ist, und dass auf dem Objektträger oder dem Deckglas mindestens eine als Referenzobjekt ausgestaltete Fläche vorgesehen ist.

4. Mikroskop nach Anspruch 3, **dadurch gekennzeichnet, dass** die Fläche eine Textur und/oder Struktur aufweist.

5. Mikroskop nach Anspruch 3, **dadurch gekennzeichnet, dass** die Fläche eine Beschichtung und/oder eine holographische Aufprägung aufweist, und dass die Beschichtung reflektierend und/oder lumineszierend ausgeführt ist.

6. Mikroskop nach einem der Ansprüche 3 bis 5, **dadurch gekennzeichnet, dass** die Textur oder Struktur der Fläche asymmetrisch ausgestaltet ist und dass die Fläche in einer Ebene angeordnet ist.

7. Mikroskop nach Anspruch 1, **dadurch gekennzeichnet, dass** als Referenzobjekt mindestens ein an der Objektträgereinheit anbringbares mikroskopisches Objekt vorgesehen ist und dass als mikroskopische Objekte Beads oder Nanocrystals vorgesehen sind.

8. Verfahren zum Betreiben eines Mikroskops, insbesondere eines konfokalen oder eines doppelkonfokalen Rastermikroskops, vorzugsweise eines Mikroskops nach einem der Ansprüche 1 bis 7, wobei dem Objekt mindestens eine Objektträgereinheit zugeordnet ist, wobei zur Kalibrierung, Justierung und/oder Einstellung des Mikroskops mindestens ein in seiner Ausgestaltung bekanntes Referenzobjekt lichtmikroskopisch detektiert wird und wobei das Referenzobjekt mit einer Bildaufnahme bei einem Mikroskop oder mit einem Rastervorgang bei einem konfokalen oder doppelkonfokalen Rastermikroskop detektiert wird, wodurch eine eindeutige Zuordnung der Position und der Orientierung des Referenzobjekts ermöglicht wird.

9. Verfahren nach Anspruch 8, **dadurch gekennzeichnet, dass** die Bilddaten des Referenzobjekts computergestützt ausgewertet werden.

10. Verfahren nach einem der Ansprüche 8 oder 9, **dadurch gekennzeichnet, dass** anhand der detektierten Bilddaten des Referenzobjekts auf dessen Lage und/oder Orientierung relativ zu dem detektierten Objektbereich geschlossen wird.

11. Verfahren nach einem der Ansprüche 8 bis 10, **dadurch gekennzeichnet, dass** durch Vergleich von detektierten Bilddaten des Referenzobjekts mit zuvor detektierten Bilddaten auf die Drift des Objekts/Objektträgereinheit geschlossen wird.

12. Verfahren nach Anspruch 11, **dadurch gekennzeichnet, dass** eine Drift des Objekts durch eine entsprechende Bewegung der Objektträgereinheit ausgeglichen wird.

13. Verfahren nach einem der Ansprüche 8 bis 13, wobei es sich bei dem Mikroskop um ein doppelkonfokales Rastermikroskop handelt, **dadurch gekennzeichnet, dass** anhand der Detektion des Referenzobjekts die optischen Teilstrahlengänge, insbesondere deren Weglängenunterschiede, und die Positionen der Objektive kalibriert und justiert werden.

14. Verfahren nach einem der Ansprüche 8 bis 13, **dadurch gekennzeichnet, dass** zum automatischen Auffinden und/oder Fokussieren des Objekts die Objektträgereinheit samt Objekt entlang der optischen Achse des Objektivs oder der Objektive bewegt wird und dass hierbei das von einer Fläche der Objektträgereinheit kommende Licht detektiert wird.
